# EUROPÄISCHE PATENTSCHRIFT

(11) **EP 2 406 680 B1**
(45) Veröffentlichungstag und Bekanntmachung des Hinweises auf die Patenterteilung: **02.09.2015**
(21) Anmeldenummer: 09774619.2
(22) Anmeldetag: 28.10.2009
(51) Int. Cl.: G02B 23/08

(54) **WINKELSPIEGEL**
PERISCOPE
ÉPISCOPE

(30) Priorität: 13.03.2009 DE 102009012657
(43) Veröffentlichungstag der Anmeldung: 18.01.2012
(73) Patentinhaber: GuS Präzision in Kunstoff Glas und Optik GmbH & Co. KG, 32312 Lübbecke (DE)
(72) Erfinder: DITTRICH, Wolfgang, deceased (DE); GUTTZEIT, Axel, 32312 Lübbecke (DE)
(74) Vertreter: Rolf, Gudrun
(86) Internationale Anmeldenummer: PCT/DE2009/001511
(87) Internationale Veröffentlichungsnummer: WO 2010/102597

(56) Entgegenhaltungen:
- WO-A-97/14985
- DE-A1- 2 613 866
- DE-A1- 3 627 716

## Beschreibung

Die Erfindung betrifft einen Winkelspiegel gemäß dem Oberbegriff des Hauptanspruches.

Es ist eine Winkelspiegelanordnung bekannt, DE 36 27 716 A1, welche aus einem Gehäuse mit einem sich in ein Fahrzeug erstreckenden Bereich mit einem Einblick vor einem Einblickprisma und mit einem sich aus einem Fahrzeug heraus erstreckenden Bereich mit einem Ausblick vor einem Ausblicksprisma besteht, welche einen Prismenkern aus durchsichtigem Material aufweist und die an der dem Einblick abgewandten Seite des Prismenkerns ein Anzeigenfeld einer Anzeigeeinheit mit in den Einblick einstellbaren Informationen aufweist.

Nachteilig an dieser Anordnung ist, dass nur ein sehr schmales Anzeigenfeld dargestellt werden kann.

Aufgabe der Erfindung ist es einen Winkelspiegel zur Verfügung zu stellen, bei dem weitere Informationen wie beispielsweise Fahrzeugdaten, Kamerabilder oder andere Informationen aus der Fahrzeugumgebung direkt in den Einblick des Winkelspiegels eingeblendet werden und gleichzeitig durch den Ausblick das vor einem Fahrzeug befindliche Gelände beobachten zu können.

Die Lösung dieser Aufgabe erfolgt in Verbindung mit den Oberbegriffsmerkmalen erfindungsgemäß durch die Merkmale des kennzeichnenden Teils des Hauptanspruches.

Dadurch, dass in einer Einblickrichtung hinter dem Einblickprisma ein Licht emittierendes Display angeordnet ist und an die Rückseite des Einblickprismas ein Medium mit einem geringen Brechungsindex angrenzt als ihn das Material einer Reflexionsfläche des Einblickprismas aufweist, wird erreicht, dass unter einem ersten Einblickswinkelbereich in den Einblick eine Totalreflexion an der Reflexionsfläche stattfindet und durch den Ausblick einfallendes Licht sichtbar ist und unter einem zweiten Einblickswinkelbereich in den Einblick das Licht des Displays sichtbar ist. Der Winkel zwischen reflektierender Grenzfläche und optischer Einblicksachse ist dabei so gewählt, dass der Beobachter mit nur geringer Veränderung der Kopfposition in vertikaler Richtung in der Lage ist, entweder gradlinig und ohne Reflexion durch die spiegelnde Fläche hindurch zu sehen oder unter Totalreflexion aus dem Ausblick des Winkelspiegels heraus zu blicken.

Ist der optische Weg gradlinig durch die spiegelnde Fläche gewählt, ist in dieser optischen Achse das Display erkennbar, wird jedoch die Kopfposition verschoben, wird der Ausblick aus dem Winkelspiegel erkennbar.

Besonders vorteilhaft an diesem erfinderischen Winkelspiegel ist, dass er ohne mechanisch bewegte Bauteile auskommt und im Einblick entweder großflächig die durch den Ausblick eintretenden Lichtstrahlen aus der Umgebung anzeigt oder ebenso großflächig die Informationen des Displays wiedergibt, wozu nur eine geringe Änderung der Blickrichtung erforderlich ist. Der erfinderische Winkelspiegel erleichtert einem Benutzer bzw. einem Fahrzeugführer damit die gleichzeitige Kontrolle seines Fahrzeugs und dessen Zustands in sehr wesentlichem Maße, da er nicht permanent zwischen den räumlich beabstandeten Fahrzeuganzeigen und dem Einblick des Winkelspiegel wechseln muss, weil ihm alle erforderlichen Daten in den Winkelspiegel eingeblendet werden können.

Weitere vorteilhafte Ausgestaltungen des Gegenstandes der Erfindung ergeben sich mit und in Kombination aus den nachfolgenden Unteransprüchen.

Gemäß einer besonders bevorzugten Ausgestaltung des Gegenstandes der Erfindung besteht das an die Rückseite des Einblickprismas angrenzende Medium einfach aus Luft, wodurch sich die technische Ausgestaltung des Winkelspiegels sehr stark vereinfacht.

Vorteilhaft ist des Weiteren eine weitere Ausbildung des Gegenstandes der Erfindung, bei dem zur Kompensation einer durch das Einblickprisma entstehenden Tonnenzerrung zwischen dem Display und dem Einblickprisma ein optischer Keil angeordnet ist, wobei zwischen dem optischen Keil und der Rückseite des Einblickprismas der Luftspalt aufrechterhalten bleiben muss, um das Prinzip der Totalreflexion an der optischen Grenzfläche des Einblickprismas aufrecht zu erhalten. Mit dem optischen Keil ist es möglich ohne diesen auftretende Verzerrungen im Einblick wesentlich oder vollständig zu reduzieren.

Entsprechend einer weiteren vorteilhaften Ausgestaltung des erfinderischen Winkelspiegels ist dieser mit Komponenten ausgestattet die verhindern, dass das aus dem Display austretende Licht den Winkelspiegel über den Ausblick verlässt, wozu auch hier keine zusätzlichen mechanisch beweglichen Bauelemente verwandt werden. Bei einer bevorzugten technischen Lösung wird ein Display eingesetzt, welches polarisiertes Licht emittiert, wie beispielsweise ein LCD-Bildschirm, und im Strahlengang zwischen dem Einblick und dem Ausblick ein Polarisationsfilter mit einer 90° zur Polarisationsrichtung des Licht des Displays ausgerichteten Anordnung eingesetzt.

Bei einer zweiten technischen Lösung erfolgt die Displaybeleuchtung mit einer vorbestimmten Bildfrequenz, wobei im Strahlengang zwischen dem Einblick und dem Ausblick ein sog. Shutter integriert ist, der den Lichtdurchtritt mit dieser Bildfrequenz verhindert, wobei diese Frequenz mehr als 20 Hz beträgt. Dieses "Chopping" genannte Hin- und Herschalten zwischen Displaybeleuchtung und Shutter ermöglicht, dass kein Licht oben aus dem Ausblick des Winkelspiegels austreten kann. Gleichzeitig wird aber das Auge eines Beobachters wegen seiner Trägheit das Bild des Displays nicht als blinkend wahrnehmen, weil die An- Ausschaltfrequenz der Beleuchtung schneller als die Wahrnehmungsträgheit des Auges ist.

Nachfolgend werden die beiden Ausführungsbeispiele der Erfindung anhang von Figuren näher beschrieben. Es zeigen:

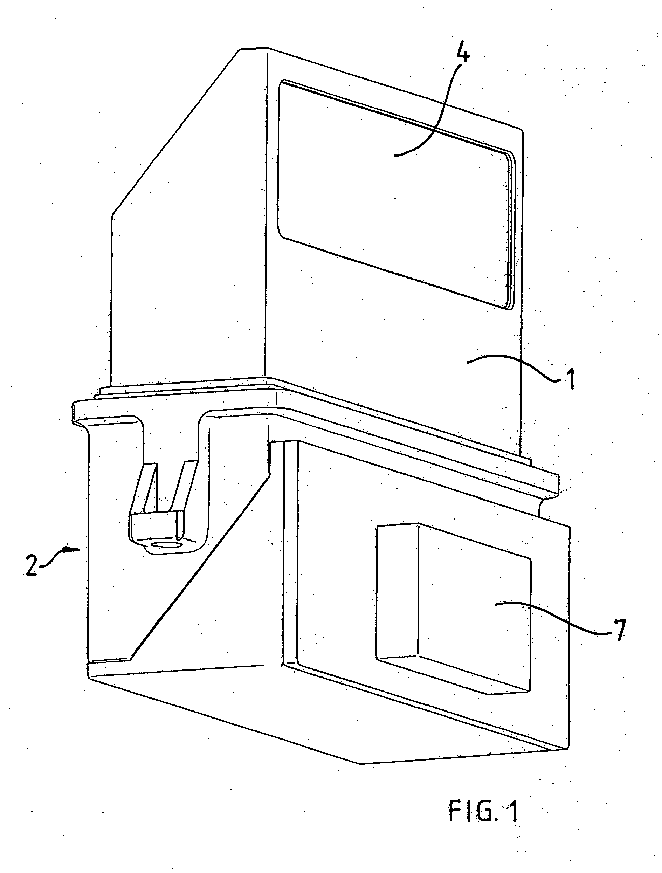

- Fig. 1.: eine räumliche Ansicht eines Winkelspiegels mit zusätzlichem Display,
- Fig. 2.: eine geschnittene Darstellung eines Winkelspiegels mit einem Polarisationsfilter und einem polarisierten Licht emittierenden Displays und
- Fig. 3.: einen Winkelspiegel mit in den Strahlengang eingebautem Shutter.

Der Winkelspiegel besteht im Wesentlichen aus einem Gehäuse 1 mit einem sich in ein Fahrzeug erstreckenden Bereich mit einem Einblick 2 vor einem Einblickprisma 3 und aus einem sich aus einem Fahrzeug heraus erstreckenden Bereich mit einem Ausblick 4 vor einem Ausblickprisma 5 sowie aus einem Prismenkern 6 aus durchsichtigem Material wie Kunststoff oder Glas.

In der Einblickrichtung hinter dem Einblickprisma 3 ist ein Licht emittierendes Display 7 angeordnet, wobei zur Kompensation einer Tonnenzerrung dazwischen ein optischer Keil 10 so angeordnet ist, dass zwischen dem optischen Keil 10 und der Rückseite des Einblickprismas 3 ein Luftspalt 8 aufrechterhalten bleibt, sodass die dazwischen befindliche Luft das Medium mit dem geringeren Brechungsindex als dem des Materials der Reflexionsfläche des Einblickprismas 3 bildet.

Denkbar ist es auch statt Luft ein anderes flüssiges, festes oder gasförmiges Material zu verwenden, so lange es nur einen geringeren Brechungsindex aufweist und physikalisch die Totalreflexion an der Reflexionsfläche des Einblickprisma 3 ermöglicht, die hier von einem an der dem Einblick 2 abgewandten Seite des Einblickprismas 3 angeordneten Deckscheibe 13 zur Verfügung gestellt wird.

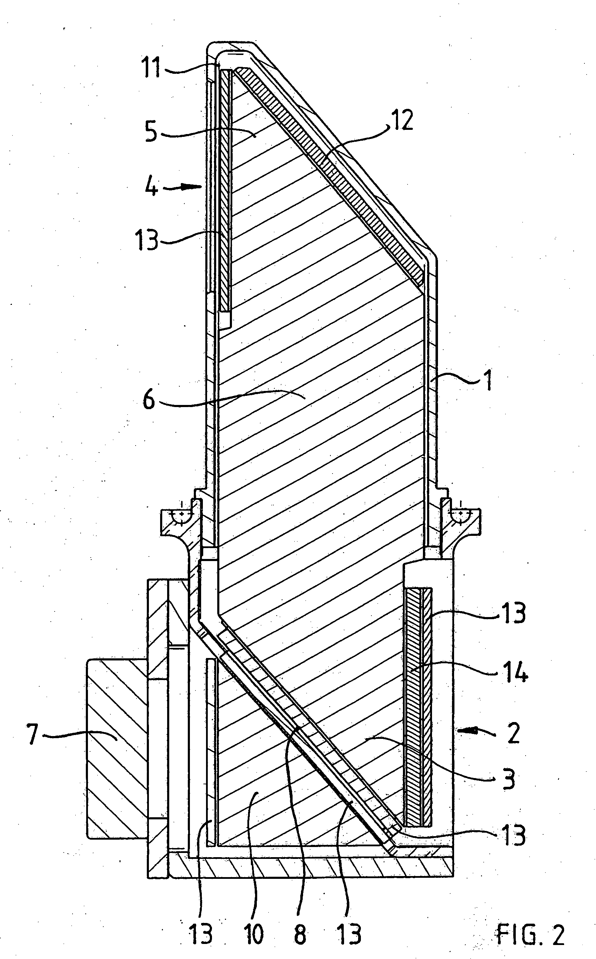

Bei einem Winkelspiegel wie er in der Fig. 2 dargestellt ist, besteht das Display 7 aus einem LCD-Bildschirm, welcher polarisiertes Licht aussendet, welches von einem 90° dazu vor dem Ausblick 4 angeordneten Polarisationsfilter vor einem Austritt aus dem Winkelspiegel gehindert wird, wobei der Polfilter 11 hier in Form einer Folie auf dem als Deckglas 13 ausgebildeten Ausblick 4 des Winkelspiegels ausgeführt ist.

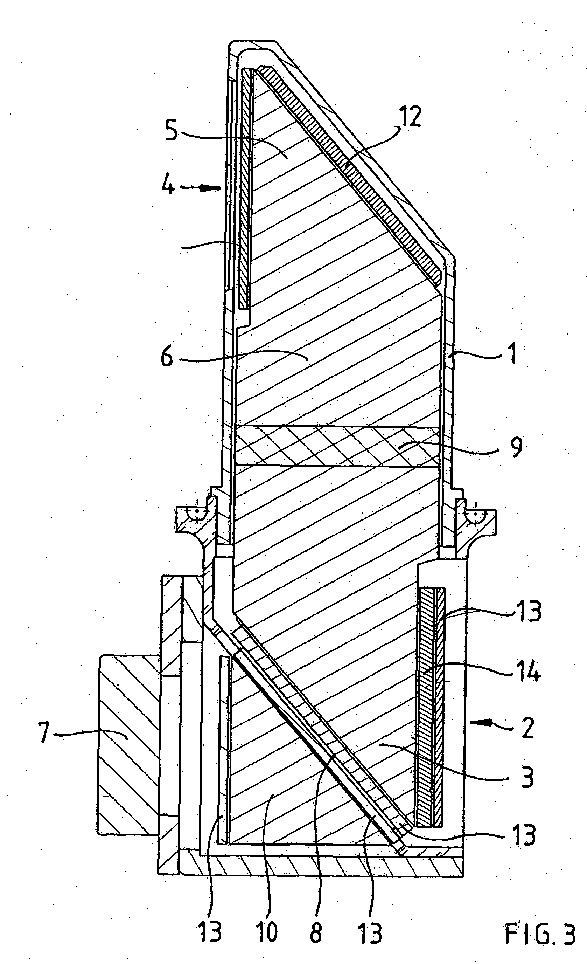

Wie in Fig. 3 dargestellt ist, ist eine andere Ausführungsform des erfinderischen Winkelspiegels mit einem Display 7 ausgestattet, dessen Displaybeleuchtung eine Bildfrequenz von mehr als 20 Hz aufweist und im Strahlengang zwischen dem Einblick 2 und dem Ausblick 4 im Kern 6 des Winkelspiegels ein Shutter 9 integriert ist, der einen Lichtdurchtritt genau bei dieser Bildfrequenz verhindert, wodurch sichergestellt werden kann, dass kein aus dem Display austretendes Licht über den Ausblick aus dem Winkelspiegel austreten kann. Die Lichten- und Austrittsflächen des Kerns 6 mit seinen Einblickprisma 3 und seinem Ausblicksprisma 5 sind jeweils mit Deckgläsern 13 versehen, wobei zwischen dem Deckglas 13 vor dem Einblick 2 zusätzlich noch ein Laserfilter 14 angeordnet ist. Die Reflexionsfläche des Ausblickprismas 5 ist mit einem Umlenkspiegel 12 ausgestattet. Die Verbindung der einzelnen Gläser erfolgt durch transparente Folien oder Kleber.

## Patentansprüche

1. Winkelspiegel, insbesondere für ein gepanzertes Fahrzeug, aus einem Gehäuse mit einem sich in ein Fahrzeug erstreckenden Bereich mit einem Einblick vor einem Einblickprisma und mit einem sich aus einem Fahrzeug heraus erstreckenden Bereich mit einem Ausblick vor einem Ausblickprisma sowie mit einem Prismenkern aus durchsichtigem Material, **dadurch gekennzeichnet, dass** in einer Einblickrichtung hinter dem Einblickprisma (3) ein Licht emittierendes Display (7) angeordnet ist und an der Reflexionsfläche des Einblickprismas (3) ein Medium mit einem geringeren Brechungsindex angrenzt, als ihn das Material einer Reflexionsfläche des Einblickprismas (3) aufweist und dass unter einem ersten Einblickswinkelbereich in den Einblick (2) eine Totalreflexion an der Reflexionsfläche stattfindet und durch den Ausblick (4) einfallendes Licht sichtbar ist und unter einem zweiten Einblickswinkelbereich in den Einblick (2) das Licht des Displays (7) sichtbar ist.

2. Winkelspiegel nach Anspruch 1, **dadurch gekennzeichnet, dass** das Medium hinter der Reflexionsfläche des Einblickprisma (3) Luft ist.

3. Winkelspiegel nach einem der vorgenannten Ansprüche, **dadurch gekennzeichnet, dass** zur Kompensation einer Tonnenzerrung zwischen dem Display (7) und-dem Einblickprismas (3) ein optischer Keil (10) angeordnet ist und zwischen der Oberfläche des optischen Keils (10) und der Reflexionsfläche des Einblickprismas (3) ein Luftspalt (8) erzeugt ist.

4. Winkelspiegel nach einem der vorgenannten Ansprüche, **dadurch gekennzeichnet, dass** das Display (7) polarisiertes Licht emittiert und im Strahlengang zwischen dem Einblick (2) und dem Ausblick (4) ein Polarisationsfilter (11) mit um 90° zur Polarisationsrichtung des vom Display (7) emittierten Lichtes angeordnet ist.

5. Winkelspiegel nach einem der vorgenannten Ansprüche 1 bis 3, **dadurch gekennzeichnet, dass** die Displaybeleuchtung eine bestimmte Bildfrequenz aufweist und im Strahlengang zwischen dem Einblick (2) und dem Ausblick (4) ein Shutter (9) integriert ist, der den Strahlengang um 180° Phasenverschoben zur Bildfrequenz des Displays verschiebt oder freigibt.

6. Winkelspiegel nach Anspruch 5. **dadurch gekennzeichnet, dass** die Displaybeleuchtung des Display (7) mit einer Bildfrequenz von mehr als 20 Hz betrieben wird.

## Claims

1. Periscope, in particular for an armoured vehicle, comprising a housing having a region extending into a vehicle with a view in front of a viewing prism, and having a region extending out of a vehicle with a sight in front of a sighting prism, and with a prism core made of transparent material, **characterized in that** a light-emitting display (7) is arranged behind the viewing prism (3) in a viewing direction, and a medium having a lower refractive index than the material of a reflection surface of the viewing prism (3) adjoins the reflection surface of the viewing prism (3), and **in that** a total reflection at the reflection surface takes place at a first viewing angle range into the view (2), and light incident through the sight (4) is visible, and the light of the display (7) is visible at a second viewing angle range into the view (2).

2. Periscope according to Claim 1, **characterized in that** the medium behind the reflection surface of the viewing prism (3) is air.

3. Periscope according to one of the preceding claims, **characterized in that** to compensate for a barrel distortion an optical wedge (10) is arranged between the display (7) and the viewing prism (3), and an air gap (8) is produced between the surface of the optical wedge (10) and the reflection surface of the viewing prism (3).

4. Periscope according to one of the preceding claims, **characterized in that** the display (7) emits polarized light, and a polarization filter (11) with light emitted at 90° to the polarization direction of the display (7) is arranged in the beam path between the view (2) and the sight (4).

5. Periscope according to one of the preceding Claims 1 to 3, **characterized in that** the display illumination has a specific refresh rate, and there is integrated in the beam path between the view (2) and the sight (4) a shutter (9) which shifts or releases the beam path phase-shifted by 180° with respect to the refresh rate of the display.

6. Periscope according to Claim 5, **characterized in that** the display illumination of the display (7) is operated at a refresh rate greater than 20 Hz.

## Revendications

1. Episcope, en particulier pour véhicule blindé, constitué d'un boîtier présentant une partie s'étendant dans le véhicule et doté d'une entrée de rayons située en avant d'un prisme d'entrée, une partie s'étendant hors du véhicule et dotée d'une sortie de rayons située en avant d'un prisme de sortie et ne âme de prisme en matériau transparent, **caractérisé en ce que** un affichage (7) émettant de la lumière est disposé derrière le prisme d'entrée (3) dans la direction d'entrée des rayons et un milieu à plus petit indice de réfraction que celui du matériau de la surface réfléchissante du prisme d'entrée (3) est adjacent à la surface réfléchissante du prisme d'entrée (3), **en ce qu'**une réflexion totale sur la surface réfléchissante a lieu en dessous d'une première plage angulaire d'entrée de l'entrée (2) des rayons et la lumière incidente à travers la sortie (4) est visible et **en ce que** la lumière de l'affichage (7) est visible en dessous d'une deuxième plage angulaire d'entrée des rayons dans l'entrée (2).

2. Episcope selon la revendication 1, **caractérisé en ce que** le milieu situé en arrière de la surface réfléchissante du prisme d'entrée (3) est l'air.

3. Episcope selon l'une des revendications précédentes, **caractérisé en ce que** pour compenser la distorsion en barillet un biseau optique (10) est disposé entre l'affichage (7) et le prisme d'entrée (3) et **en ce qu'**un interstice d'air (8) est formé entre la surface du biseau optique (10) et la surface réfléchissante du prisme d'entrée (3).

4. Episcope selon l'une des revendications précédentes, **caractérisé en ce que** l'affichage (7) émet une lumière polarisée et **en ce qu'**un filtre polarisant (11) dont la direction de polarisation est décalée de 90° par rapport à la direction de polarisation de la lumière émise par l'affichage (7) est disposé entre l'entrée des rayons (2) et la sortie des rayons (4).

5. Episcope selon l'une des revendications 1 à 3 qui précèdent, **caractérisé en ce que** l'éclairage de l'affichage présente une fréquence d'image définie et **en ce qu'**un obturateur (9) qui déplace ou libère le parcours des rayons à un déphasage de 180° par rapport à la fréquence d'image de l'affichage est intégré dans le parcours des rayons entre l'entrée des rayons (2) et la sortie des rayons (4).

6. Episcope selon la revendication 5, **caractérisé en ce que** l'éclairage de l'affichage (7) est conduit à une fréquence d'image supérieure à 20 Hz.
